# DEMANDE DE BREVET EUROPEEN

(11) **EP 2 355 281 A1**
(43) Date de publication de la demande: **10.08.2011**
(21) Numéro de dépôt: 11150337.1
(22) Date de dépôt: 06.01.2011
(51) Int. Cl.: H02G 3/10

(54) **Boîtier de dérivation**

(30) Priorité: 04.02.2010 FR 1050790
(71) Demandeur: Legrand France, 87000 Limoges (FR); Legrand SNC, 87000 Limoges (FR)
(72) Inventeur: Mullier, Daniel, 87380, Glanges (FR); Caille, Jean-Loup, 87510, Peyrilhac (FR)
(74) Mandataire: Lepelletier-Beaufond, François

(57) **Abrégé**

Boîtier de dérivation (100, 150) pour un chemin de câbles de type métallique (200), présentant une face arrière (101) comportant au moins un crochet (111 , 112) en saillie depuis ladite face, le crochet présentant une base (113) et un bras (114) élastique dans le prolongement de ladite base et étant adapté à coopérer par crochetage avec un élément (201, 203) correspondant du chemin de câble (200), comportant en outre sur sa face arrière des moyens (130, 131) adaptés pour fixer le boîtier sur une surface plane et au moins un élément en saillie (120, 151, 152) depuis la face arrière sur une hauteur au moins aussi grande que celle de la base (113) dudit crochet, ledit au moins un élément étant adapté à poser le boîtier sur une surface plane.

## Description

### DOMAINE DE L'INVENTION

La présente invention concerne d'une manière générale les boîtiers de dérivation.

Plus particulièrement, la présente invention concerne les boîtiers de dérivation destinés à être montés sur des chemins de câbles métalliques à treillis filaire ou en tôle.

### ARRIERE-PLAN TECHNOLOGIQUE

Les boîtiers de dérivation sont en général adaptés à être fixés à des chemins de câbles métalliques en treillis filaires ou en tôle à l'aide d'un ou plusieurs crochets faisant saillie depuis leur face arrière.

Ces boîtiers sont dédiés à la fixation sur des chemins de câbles. A cause des crochets faisant saillie depuis leur face arrière il n'est pas possible de les fixer sur une surface plane, telle qu'un mur.

Le problème est de pouvoir fixer ce type de boîtier indifféremment à un chemin de câble ou à un mur.

### OBJET DE L'INVENTION

La présente invention propose à cet effet un boîtier de dérivation pour un chemin de câbles de type métallique, présentant une face arrière comportant au moins un crochet en saillie depuis ladite face, le crochet présentant une base et un bras élastique dans le prolongement de ladite base et étant adapté à coopérer par crochetage avec un élément correspondant du chemin de câble, et comportant en outre sur sa face arrière des moyens adaptés pour fixer le boîtier sur une surface plane et au moins un élément en saillie depuis la face arrière sur une hauteur au moins aussi grande que celle de la base dudit crochet, ledit au moins un élément étant adapté à poser le boîtier sur une surface plane.

Ainsi, avantageusement, l'invention permet de disposer d'un boîtier polyvalent pouvant être fixé indifféremment à un chemin de câbles ou un mur, pour un surcout modéré par rapport aux boîtiers de dérivation connus. De par sa hauteur, ledit au moins un élément en saillie permet de fixer de manière stable le boîtier sur une surface plane malgré la présence de crochets pour la fixation à un chemin de câbles.

Selon des caractéristiques avantageuses, éventuellement combinées : pour des raisons de fiabilité et de commodité :
- lesdits moyens adaptés à fixer le boîtier sur une surface plane sont des trous pratiqués dans la face arrière pour le passage de moyens de fixation rapportés, notamment des vis de fixation.
- lesdits trous sont oblongs.
- ledit au moins un élément en saillie depuis la face arrière est formé par des tétons disposés autour de chacun des trous de fixation et ayant ladite hauteur au moins aussi grande que celle de la base dudit crochet.
- les tétons sont creux, et débouchants vers l'intérieur du boîtier.

Ainsi, avantageusement, cette disposition permet de noyer la tête de vis et de disposer ainsi de plus de place à l'intérieur du boîtier.

Selon d'autres caractéristiques avantageuses, éventuellement combinées :
- ledit au moins un élément en saillie depuis la face arrière est formé par un rebord faisant saillie depuis le pourtour de la face arrière du boîtier sur ladite hauteur au moins aussi grande que celle de la base dudit crochet
- le rebord présente des échancrures pour le passage des fils d'un chemin de câbles type métallique à treillis filaire.
- ledit au moins un crochet fendu en son centre pour le passage d'un fil vertical d'un chemin de câbles de type métallique à treillis filaire.
- le bras dudit au moins un crochet est précontraint de manière à venir enserrer l'élément correspondant du chemin de câble lorsque celui-ci est inséré dans le crochet.
- le boîtier est réalisé par moulage d'un matériau plastique.

### BREVE DESCRIPTION DES DESSINS

L'exposé de l'invention sera maintenant poursuivi par la description détaillée d'un exemple de réalisation, donnée ci-après à titre illustratif et non limitatif, en référence aux dessins annexés. Sur ceux-ci :
- la figure 1 est une vue en perspective d'un boîtier selon l'invention monté sur un chemin de câbles de type à treillis métallique filaire ;
- la figure 2 est une vue en perspective d'un mode de réalisation alternatif d'un boîtier selon l'invention.
- la figure 3 est une vue de profil du boîtier de la figure 2.

### DESCRIPTION DETAILLEE D'UN EXEMPLE DE REALISATION

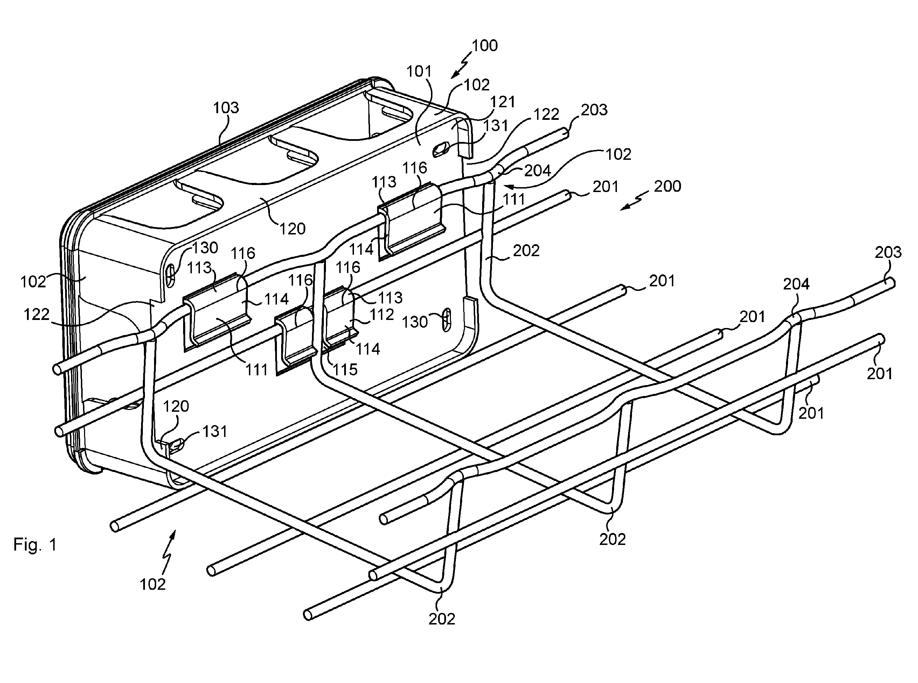

Comme visible en figure 1, un boîtier de dérivation 100 selon l'invention est fixé sur un chemin de câbles de type métallique 200. Le chemin de câbles présente un profil sensiblement rectangulaire ouvert vers le haut ; il est constitué de fils horizontaux 203, 201 et de fils verticaux 202 soudés entre eux formant un treillis métallique. Le boîtier présente un profil rectangulaire avec une face arrière 101 et quatre faces latérales 102. Il est fermé par un couvercle 103. La face arrière 101 présente trois crochets 111, 112, en saillie depuis ladite face. Chacun d'entre eux coopère par crochetage avec un fil horizontal 203, 201 du chemin de câbles 200. Chacun des crochets présente une base 113 faisant saillie depuis la face arrière 101 et un bras élastique 114 dans le prolongement de la base. On entend par base 113 la partie du crochet faisant saillie depuis la face arrière 101 jusqu'au début de la portion rectiligne 114 que constitue le bras élastique. Ainsi, la limite entre la base 113 et le bras élastique 114 est définie par une arête fictive 116 telle que visible en figure 1. De manière connue en soi, le bras de chacun des crochets est précontraint de manière à venir enserrer le fil horizontal correspondant du chemin de câble lorsque celui-ci est inséré dans le crochet comme visible en figure 1. Un tel montage permet d'assurer une meilleure stabilité de la fixation du boîtier sur le chemin de câble. Le crochet 112 diffère des crochets 111 en ce qu'il est fendu sensiblement en son centre. La fente 115 correspondante présente une largeur suffisante pour accommoder un fil vertical 202 du chemin de câble 200 tel que visible en figure 1. Ce montage permet de limiter avantageusement le débattement latéral du boîtier suivant une direction longitudinale du chemin de câbles lorsqu'il est monté dessus.

Sur sa face arrière 101, le boîtier 100 présente quatre trous 130, 131, adaptés à fixer le boîtier sur une surface plane. Les trous seront dimensionnés pour le passage du corps de vis de fixation vissés par l'intérieur du boîtier. Les trous 130 et 131 diagonalement opposés sont respectivement oblongs selon une direction verticale et horizontale pour faciliter le positionnement du boîtier lors de sa fixation à un mur.

Pour permettre le montage du boîtier sur un mur, la face arrière 101 de celui-ci présente un rebord 120 faisant saillie depuis le pourtour 121 de la face arrière 101.

La hauteur du rebord 120 est en pratique supérieure ou égale à celle de la base 113 des crochets depuis le plan de la face arrière 101 du boîtier.

De cette manière, lorsque le boîtier 100 est posé sur une surface plane (non représentée), il vient reposer sur le rebord 120, les bras 114 des crochets fléchissent alors légèrement vers la face arrière 101 et ne constituent pas une gène pour le montage du boîtier sur une surface plane.

On notera que le rebord présente deux échancrures 122 en regard l'une de l'autre sur deux faces opposées du boîtier. Ces échancrures 122 sont adaptées pour le passage des fils horizontaux 201 dans le chemin de câble de type métallique à treillis filaire tel que visible en figure 1.

Les fils horizontaux 203 disposés aux extrémités du chemin de câble 200 présentent une courbure 204 à cet endroit, par conséquent ils ne nécessitent pas d'échancrure dans le rebord 122.

Ainsi, dans un mode de réalisation non représenté, un boîtier selon l'invention présente un rebord de ce type tout le long de son pourtour en vue d'être monté sur un chemin de câble dont les fils horizontaux présentent tous une courbure adaptée pour une telle fixation à la manière de la courbure 204 représentée en figure 1.

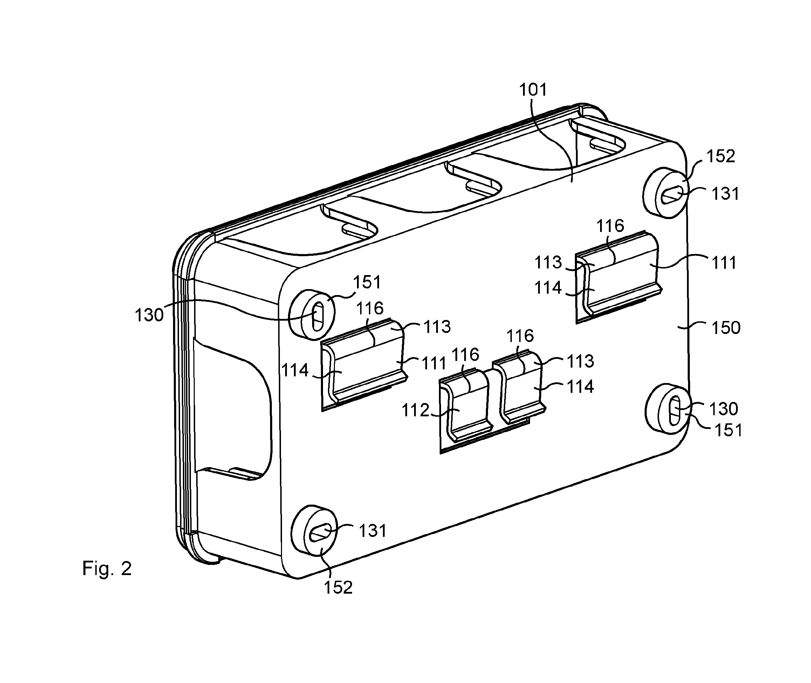

La figure 2 représente un mode de réalisation alternatif d'un boîtier 150 selon l'invention.

Le boîtier 150 est identique au boîtier 100 décrit précédemment, à l'exception du rebord 120 et des échancrures 122. Les repères numériques de la figure 1 ont donc été repris pour les éléments identiques.

Comme visible plus particulièrement en figure 2, des tétons 151 et 152 sont disposés autour de chacun des trous 130 et 131 respectivement. De manière analogue au rebord 120 du boîtier 100, la hauteur des tétons 151 et 152 est égale ou supérieure à la hauteur de la base 113 des crochets 111 et 112.

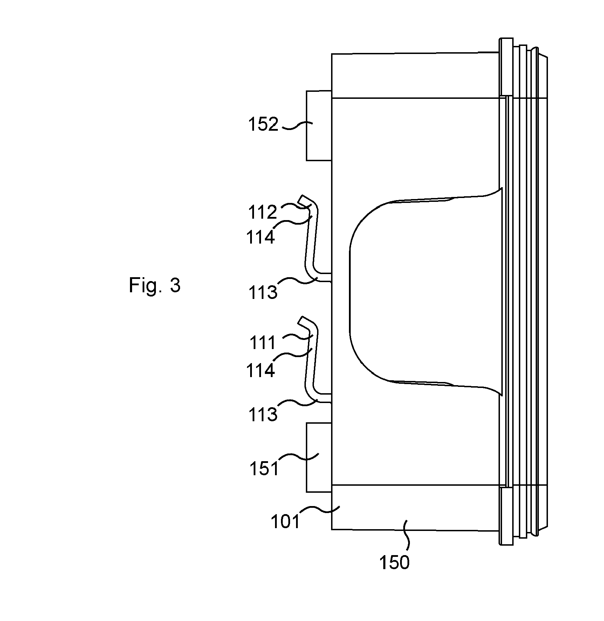

De cette manière, tout à fait analogue à celle du boîtier 100, le boîtier 150 est adapté à être posé sur une surface plane sur les tétons 151 et 152 sur une surface plane sans que les crochets ne constituent un obstacle. En pratique, comme visible en figure 3, l'extrémité des crochets dépasse au-delà du plan formé par les extrémités des tétons. Cependant, tout comme pour le boîtier 100, les crochets du boîtier 150 fléchissent légèrement vers la face arrière 101 du boîtier lorsque celui-ci est posé sur une surface plane sur les tétons 151 et 152.

Dans une variante de réalisation non illustrée d'un boîtier similaire au boîtier 150 tel que décrit précédemment, les tétons 151 et 152 sont creux et débouchent vers l'intérieur du boîtier. Ainsi, avantageusement, une telle structure permet de noyer la tête des vis (non représentées) de fixation destinées à fixer le boîtier sur un mur. Il en résulte un gain de place à l'intérieur du boîtier pour des éléments électriques en particulier.

De manière particulièrement économique et avantageuse, l'ensemble des boîtiers décrits ci-dessus, à titre d'exemple, sont réalisés par moulage d'un matériau plastique.

De nombreuses autres variantes sont possibles en fonction des circonstances, et l'on rappelle à cet égard que l'invention ne se limite pas aux exemples décrits et représentés.

## Revendications

1. Boîtier de dérivation (100, 150) pour un chemin de câbles de type métallique (200), présentant une face arrière (101) comportant au moins un crochet (111, 112) en saillie depuis ladite face, le crochet présentant une base (113) et un bras (114) élastique dans le prolongement de ladite base et étant adapté à coopérer par crochetage avec un élément (201, 203) correspondant du chemin de câble (200), **caractérisé en ce qu'**il comporte en outre sur sa face arrière des moyens (130, 131) adaptés pour fixer le boîtier sur une surface plane et au moins un élément en saillie (120, 151, 152) depuis la face arrière sur une hauteur au moins aussi grande que celle de la base (113) dudit crochet, ledit au moins un élément en saillie (120, 151, 152) étant adapté à poser le boîtier sur une surface plane.

2. Boîtier (100, 150) selon la revendication précédente **caractérisé en ce que** lesdits moyens adaptés à fixer le boîtier sur une surface plane sont des trous (130, 131) pratiqués dans la face arrière pour le passage de moyens de fixation rapportés, notamment des vis de fixation.

3. Boîtier (100, 150) selon la revendication précédente **caractérisé en ce que** lesdits trous (130, 131) sont oblongs.

4. Boîtier (150) selon la revendication 2 ou 3 **caractérisé en ce que** ledit au moins un élément en saillie depuis la face arrière est formé par des tétons (151, 152) disposés autour de chacun des trous de fixation (130, 131) et ayant ladite hauteur au moins aussi grande que celle de la base (113) dudit crochet (111, 112).

5. Boîtier (150) selon la revendication précédente, **caractérisé en ce que** les tétons (151, 152) sont creux, et débouchants vers l'intérieur du boîtier (100).

6. Boîtier (100) selon l'une quelconque des revendications 1 à 3, **caractérisé en ce que** ledit au moins un élément en saillie depuis la face arrière est formé par un rebord (120) faisant saillie depuis le pourtour (121) de la face arrière (101) du boîtier (100) sur ladite hauteur au moins aussi grande que celle de la base dudit crochet (111, 112).

7. Boîtier (100) selon la revendication précédente, **caractérisé en ce que** le rebord (120) présente des échancrures (122) pour le passage des fils (201) d'un chemin de câbles (200) type métallique à treillis filaire.

8. Boîtier (100, 150) selon l'une quelconque des revendications précédentes, **caractérisé en ce que** ledit au moins un crochet (112) est fendu en son centre pour le passage d'un fil vertical (202) d'un chemin de câbles (200) de type métallique à treillis filaire.

9. Boîtier (100, 150) selon l'une quelconque des revendications précédentes **caractérisé en ce que** le bras dudit au moins un crochet est précontraint de manière à venir enserrer l'élément correspondant du chemin de câble lorsque celui-ci est inséré dans le crochet.

10. Boîtier selon l'une quelconque des revendications précédentes **caractérisé en ce qu'**il est réalisé par moulage d'un matériau plastique.
